(19) Europäisches Patentamt
European Patent Office
Office européen des brevets

(11) **EP 2 064 258 B1**

(12) **FASCICULE DE BREVET EUROPEEN**


(45) Date de publication et mention de la délivrance du brevet:
**30.10.2013 Bulletin 2013/44**

(21) Numéro de dépôt: **07848272.6**

(22) Date de dépôt: **21.09.2007**

(51) Int Cl.:
***C08G 18/70*** *(2006.01)* ***C08G 18/78*** *(2006.01)*
***C09D 175/04*** *(2006.01)*

(86) Numéro de dépôt international:
**PCT/FR2007/001543**

(87) Numéro de publication internationale:
**WO 2008/034978 (27.03.2008 Gazette 2008/13)**


(54) **UTILISATION DE COMPOSITIONS POLYISOCYANATES POUR REVETEMENTS A BRILLANCE ELEVEE**

VERWENDUNG VON POLYISOCYANAT-ZUSAMMENSETZUNGEN FÜR HOCHGLANZBESCHICHTUNGEN

USE OF POLYISOCYANATE COMPOSITIONS FOR HIGH-GLOSS COATINGS


(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.09.2006 FR 0608341**

(43) Date de publication de la demande:
**03.06.2009 Bulletin 2009/23**



(73) Titulaire: **Vencorex France**
**69800 Saint-Priest (FR)**

(72) Inventeur: **BOURGEOIS, Damien**
**F-34830 Clapiers (FR)**

(74) Mandataire: **Colombet, Alain André et al**
**Cabinet Lavoix**
**62, rue de Bonnel**
**69448 Lyon Cedex 03 (FR)**


(56) Documents cités:
**EP-A- 1 024 184** **WO-A-01/40347**
**US-A1- 2006 047 065**


Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).


EP 2 064 258 B1

Printed by Jouve, 75001 PARIS (FR)

## Description

La présente invention a pour objet l'utilisation de compositions polyisocyanates pour la réalisation de revêtements, et en particulier de peintures ou vernis, présentant une brillance élevée, sur tout type de support, notamment sur bois.

Les domaines d'application dans lesquels interviennent des revêtements sont d'une très grande diversité et requièrent de plus en plus des compositions de très haute technicité, possédant d'excellentes qualités, tant sur le plan de l'application du revêtement que sur les caractéristiques du produit fini.

Il est sans cesse demandé des revêtements possédant des propriétés améliorées, telles que vitesse de séchage accrue, dureté augmentée, diminution des quantités de solvants ou encore absence de solvants, et autres, pour ne citer que celles le plus souvent évoquées.

Il existe par exemple une forte demande pour des compositions de revêtements, peintures ou vernis, sur tout type de support, en particulier bois, plastique, verre, métal, éléments de maçonnerie pour murs et sols (« flooring » en langue anglaise), présentant d'excellentes propriétés de brillance, en particulier pour des compositions de revêtement de type polyuréthane en phase aqueuse.

On connaît déjà des compositions pour revêtements, de type polyuréthane en phase aqueuse, dans lesquelles le durcisseur comprend schématiquement un composant isocyanate hydrophobe auquel est ajouté ou bien est greffé un agent tensio-actif, de manière à obtenir un durcisseur hydrophile à composant isocyanate, comme par exemple dans le document WO 01/40347 A1.

On a observé toutefois que de tels durcisseurs entraînent souvent une diminution, voire un perte, de la brillance de la composition finale de revêtement, bien que celle-ci présente de meilleures propriétés mécaniques (dureté et résistance à l'abrasion par exemple). Il est donc souhaitable de pouvoir disposer de durcisseurs pour revêtements de type polyuréthane conférant auxdits revêtements de bonnes propriétés mécaniques ainsi qu'une brillance élevée, notamment pour les revêtements de sols, et en particulier pour les revêtements sur bois.

Ainsi, un premier objectif de la présente invention consiste à fournir une composition de revêtement possédant des propriétés de brillance améliorées par rapport aux compositions de revêtement connues dans le domaine.

Un autre objectif de l'invention consiste à fournir une composition aqueuse de revêtement de type polyuréthane possédant des propriétés de brillance améliorées par rapport aux compositions de revêtement connues dans le domaine.

Un autre objectif de la présente invention consiste à fournir une composition aqueuse de revêtement possédant des propriétés de brillance améliorées, comme revêtement de type polyuréthane, peinture ou vernis, en particulier revêtement de sol, notamment sur bois.

D'autres objectifs encore apparaîtront dans l'exposé de l'invention qui suit.

Ainsi, la présente invention concerne tout d'abord l'utilisation d'une composition de durcisseur de type polyisocyanate hydrophile, comprenant au moins un polyisocyanate hydrophobe, ledit polyisocyanate hydrophobe comportant une ou plusieurs fonctions allophanates, lesdites fonctions allophanates étant présentes dans ladite composition de durcisseur en une quantité au moins égale à 6% molaire par rapport au nombre total de moles de monomères isocyanate transformés dans la préparation de la composition de durcisseur, ledit durcisseur comprenant un agent tensio-actif anionique et/ou non ionique dont moins de 50%, avantageusement moins de 20%, de préférence moins de 10% en masse est sous forme liée par l'intermédiaire d'une liaison chimique avec le polyisocyanate.
pour la préparation d'une formulation de revêtement polyuréthane en phase aqueuse.

La composition pour revêtement définie *supra* comprend en outre éventuellement un ou plusieurs pigments et/ou additifs facilitant la mise en oeuvre de la formulation ou la formation des revêtements. Les additifs sont notamment choisis parmi additifs de rhéologie, d'étalement, tensio-actifs et autres, et leurs mélanges.

Le revêtement obtenu par utilisation de la composition définie précédemment présente un bel aspect et possède de bonnes propriétés mécaniques ainsi qu'une brillance élevée et tout particulièrement une brillance améliorée par rapport aux revêtements de l'art antérieur.

La présente invention permet en outre d'obtenir un très bon compromis entre faible viscosité du durcisseur et brillance du revêtement, comme indiqué plus loin.

L'utilisation formant un des objets de la présente invention est particulièrement bien adaptée dans le domaine des vernis pour revêtement de sols (« flooring » en langue anglaise), en particulier sur support en bois.

Outre une haute brillance, parmi les propriétés recherchées pour les revêtements, notamment de type vernis, en particulier pour les revêtements de sols, figurent une dureté élevée, une bonne adhérence au substrat, une bonne résistance aux attaques chimiques et aux ultraviolets, entre autres.

Il a maintenant été découvert de manière surprenante que la présence de fonctions allophanate dans des polyisocyanates hydrophobes présents dans une composition de polyisocyanates hydrophiles formant le durcisseur de compositions polyuréthane, permettent d'améliorer ces propriétés de manière très sensible.

Dans le cadre de la présente invention, l'utilisation revendiquée permet la préparation d'un revêtement sous l'aspect d'une formulation monocomposant (1 K), ou bien d'une formulation bi-composant (2K) ou encore multi-composants, les formulations 2K étant tout particulièrement préférées. Chacune de ces formulations peut se présenter sous forme aqueuse ou hydro-organique (eau + solvant).

Au sens de la présente invention, on entend par « polyisocyanate hydrophile » un polyisocyanate auto-émulsionnable dans l'eau, c'est-à-dire formant, au contact de toute composition en phase aqueuse, une émulsion stable de particules organiques d'isocyanate dans le milieu aqueux, lequel milieu aqueux pouvant être lui-même une solution, une dispersion ou une émulsion. Par « polyisocyanate hydrophobe », on entend un polyisocyanate qui ne répond pas à la définition donnée ci-dessus.

Le polyisocyanate hydrophile (ou la composition polyisocyanate hydrophile) peut être hydrophile par nature ou bien encore mélangé à, et/ou greffé par, un ou plusieurs agents tensio-actifs susceptibles de conférer la propriété d'hydrophilie audit polyisocyanate. Pour les besoins de l'invention, on préfère l'ajout à un polyisocyanate hydrophobe de un ou plusieurs agents tensio-actifs ioniques ou non ioniques, et/ou le greffage, sur un polyisocyanate hydrophobe, par un ou plusieurs agents tensio-actifs ioniques ou non ioniques.

Il est particulièrement avantageux d'utiliser, comme agent tensio-actif, un tensio-actif anionique ou encore un tensio-actif non ionique, comprenant éventuellement un fragment de chaîne polyéthylène glycol et/ou propylène glycol d'au moins 1, avantageusement d'au moins 3, de préférence d'au moins 5 unités éthylène-oxyle et/ou propylène-oxyle.

De tels polyisocyanates hydrophiles sont notamment connus, et on peut citer, à titre d'exemples non-limitatifs, le Bayhydur® XP 2487 ou le Bayhydur® 3100 de la société Bayer, ou encore le Rhodocoat® X EZ-M 502 ou le Rhodocoat® X EZ-M 501 de la société Rhodia.

Avantageusement, le tensio-actif est choisi de manière qu'il ne comporte pas ou peu de fonction réactive avec le polyisocyanate. Autrement dit, le tensio-actif est présent dans la composition polyisocyanate sous forme essentiellement libre (par opposition à une forme liée par l'intermédiaire d'une liaison chimique avec les polyisocyanates).

Par "forme essentiellement libre", on signifie que moins de 50%, avantageusement moins de 20%, de préférence moins de 10% en masse de l'agent tensio-actif est sous forme liée.

Toutefois, les compositions dans lesquelles le tensio-actif est majoritairement, voire totalement lié aux polyisocyanates, de manière covalente par l'intermédiaire d'une fonction carbamate ou urée, sont également comprises dans le champ de la présente invention.

Selon un mode de réalisation préféré, le tensio-actif est un agent anionique présentant au moins une fonction choisie parmi les sulfates ou phosphates d'aryle(s) et/ou d'alcoyle(s), et les aryl- ou alcoyl-phosphonates, -phosphinates et -sulfonates.

De préférence encore, l'agent tensio-actif-anionique comporte une partie hydrophile formée par exemple de ladite fonction anionique dudit fragment de chaîne polyéthylène glycol et/ou polypropylène glycol et d'une partie lipophile à base d'un radical hydrocarboné. La partie lipophile est de préférence choisie parmi les groupes alcoyles et aryles, de préférence en $C_6$-$C_{30}$.

Il est bien entendu que la composition sous forme de solution de la présente invention peut comprendre un mélange d'au moins deux tensio-actifs tels que décrits dans la présente description.

On préfère tout particulièrement un agent tensio-actif anionique répondant à la formule (I) suivante :

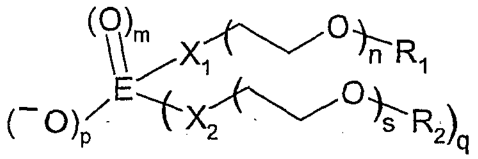

(I)

dans laquelle:

- E représente un élément choisi parmi le phosphore, le carbone et le soufre ;
- $R_1$ et $R_2$, identiques ou différents, représentent, indépendamment l'un de l'autre, un radical hydrocarboné, avantageusement choisi parmi les radicaux aryle en $C_6$-$C_{30}$ et les radicaux alcoyle en $C_1$-$C_{20}$, éventuellement substitués, avantageusement radicaux alcoyle en $C_{10}$-$C_{20}$ éventuellement substitués.
- $X_1$ représente une liaison ou un radical bivalent choisi parmi $-Y_1-$, $-A_1-$, $-A_1-Y_1-$, $-Y_1-A_1-$, $-Y_1-A_1-Y'_1$ et $-[E(O)_m(O^-)_p]-$ ;
- $X_2$ représente une liaison ou un radical bivalent choisi parmi $-Y_2-$, $-A_2-$, $-A_2-Y_2-$, $-Y_2-A_2-$ et $-Y_2-A_2-Y'_2$ ;
- $A_1$ et $A_2$, identiques ou différents, représentent, indépendamment l'un de l'autre, un radical bivalent alcoylène éventuellement substitué, y compris fonctionnalisé, et par exemple éthylène ou méthylène ;
- $Y_1$, $Y'_1$, $Y_2$ et $Y'_2$, identiques ou différents, sont choisis parmi un chalcogène, avantageusement choisi parmi les plus légers à savoir le soufre et surtout l'oxygène, les éléments métalloïdes des rangs atomiques au plus égal à

celui du phosphore et appartenant à la colonne VB de la classification tableau périodique des éléments, sous la forme de dérivés d'amines ou de phosphines tertiaires, le radical assurant le caractère tertiaire étant avantageusement d'au plus 4 atomes de carbone, de préférence d'au plus 2 atomes de carbone ;

- m représente zéro ou un nombre entier égal à 1 ou à 2 ;
- n est zéro ou un entier choisi entre 1 et 30 avantageusement entre 5 et 25, de préférence entre 9 et 20 (intervalles fermés c'est-à-dire comprenant les bornes) ;
- p représente un entier égal à 1, 2 ou 3 ;
- q représente zéro ou 1 ; et
- s représente zéro ou un entier entre 1 et 30 avantageusement entre 5 et 25, de préférence entre 9 et 20 (intervalles fermés c'est-à-dire comprenant les bornes) ;

étant entendu que lorsque E représente l'atome de carbone, alors q est égal à zéro, m représente 1 et $X_1$ représente une liaison ou un radical bivalent choisi parmi $-A_1-$, $-Y_1-$, $-A_1-Y_1-$, -O-C(=O) -O- et $-[C(O)_m(O^-)_p]-$.

Quoique cela ne fasse pas partie des composés préférés, il convient de noter que s et/ou n peuvent être égaux à zéro, avec la condition que E est phosphore et que lorsque s et n sont égaux à zéro, respectivement $R_1$ et/ou $R_2$ représentent des alcoyles en $C_8$-$C_{12}$, avantageusement ramifiés, ou aralcoyles en $C_{12}$-$C_{16}$ ou alcoylaryles en $C_{10}$-$C_{14}$.

Lorsque E représente l'atome de phosphore et $X_1$ représente un radical $-[E(O)_m(O^-)_p]-$, le composé de formule (I) appartient à la famille des pyro-acides, tels les diesters, symétriques ou non, de l'acide pyrophosphorique.

Le nombre total de carbone dans les agents tensio-actifs de formule (I) visés par la présente invention est avantageusement d'au plus 100, de préférence d'au plus 60, avantageusement d'au plus 50.

Le radical divalent $X_1$, et éventuellement le radical divalent $X_2$, peuvent être avantageusement choisis parmi les radicaux divalents suivants (la partie gauche de la formule étant liée à E) :

- lorsque E représente l'atome de phosphore, un des $X_1$ ou $X_2$ peut être choisi parmi -O-P(=O) (O-) -X"- et $-O-(R_{10}-O)$ P(=O) -X", $R_{10}$ représentant un reste hydrocarboné de $C_2$ à $C_{30}$, comprenant une ou plusieurs unités éthylène-oxyles ou propylène-oxyles, avantageusement au moins 5, de préférence au moins 7 unités éthylène-oxyles ou propylène-oxyles et X" représentant un atome d'oxygène ou une simple liaison;
- une liaison directe entre E et le premier radical bivalent éthylène dudit fragment de chaîne polyéthylène glycol (ou polypropylène glycol) ;
- un radial bivalent méthylène éventuellement substitué, et dans ce cas avantageusement fonctionnalisé en partie ;
- un radical bivalent choisi parmi $-Y_1-$, $-A_1-$, $-A_1-Y_1-$, $-Y_1-A_1-$, $-Y_1-A_1-Y'_1$ et $-[E(O)_m(O^-)_p]-$, dans le cas de $X_1$, et choisi parmi $-Y_2-$, $-A_2-$, $-A_2-Y_2-$, $-Y_2-A_2-$et $-Y_2-A_2-Y'_2$ dans le cas de $X_2$, où $Y_1$, $Y'_1$, $Y_2$ et $Y'_2$ sont tels que définis précédemment, et $A_1$ et $A_2$, identiques ou différents, représentent, indépendamment l'un de l'autre, un radical alcoylène éventuellement substitué, y compris fonctionnalisé, $A_1$ et $A_2$ étant avantageusement éthylène ou méthylène, de préférence éthylène dans les structures $-A_1-Y_1-$ ( ou $-A_2-Y_2-$) et surtout $-Y_1-A_1-Y'_1-$ ou ($-Y_2-A_2-Y'_2-$), et méthylène dans les structures $-A_1-Y_1-$ ( ou $-A_2-Y_2-$).

Lorsque E représente l'atome de phosphore, la formule (I) devient la formule (II) :

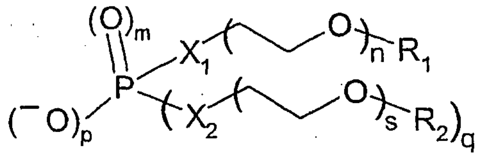
(II)

qui, lorsque q est zéro, devient la formule (II') :

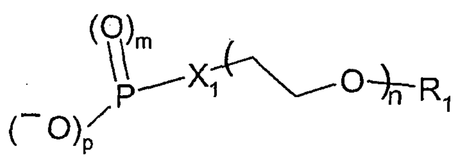
(II')

formules (II) et (II') dans lesquelles $R_1$, $R_2$, $X_1$, $X_2$, m, n, p, q et s sont tels que définis précédemment.

Lorsque E représente l'atome de carbone, la formule (I) devient la formule (III) :

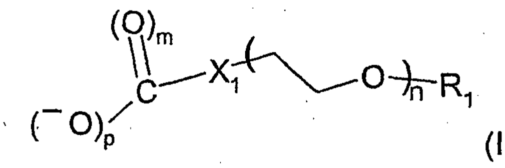

(III)

dans laquelle $R_1$, m, n et p sont tels que définis précédemment et $X_1$ représente une liaison ou un radical bivalent choisi parmi $-A_1-$, $-A_1-Y_1-$, et $-[C(O)_m(O^-)_p]-$, où $A_1$ et $Y_1$ sont tels que définis précédemment.

Parmi les tensioactifs utilisables dans la présente invention, on préfère tout particulièrement ceux de formule (II) ci-dessus, sous forme neutralisée ou non, et possédant la structure ($II_1$) ou la structure ($II_2$) suivantes :

($II_1$)

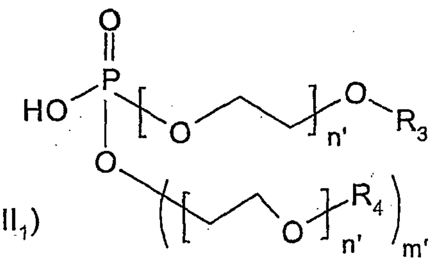

($II_2$)

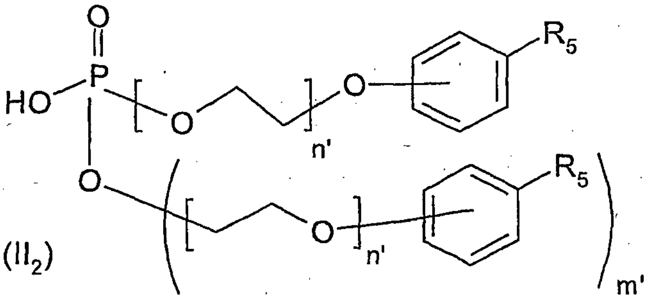

structures dans lesquelles :

- n' représente un entier compris entre 5 et 12, bornes incluses;
- m' représente 0 ou 1 ;
- $R_3$ et $R_4$, identiques ou différents, représentent indépendamment l'un de l'autre un radical alcoyle, linéaire ou ramifié, comportant de 10 à 20 atomes de carbone ; et
- $R_5$ représente un radical alcoyle, linéaire ou ramifié comportant de 6 à 12 atomes de carbone.

On préfère tout particulièrement les composés de structure ($II_1$) où $R_3$ et $R_4$ représente chacun un radical alcoyle comportant 13 atomes de carbone, par exemple le radical $n-C_{13}H_{27}$.

On préfère également les composés de structure ($II_2$) où $R_5$ représente un radical alcoyle comportant 9 atomes de carbone, par exemple le $n-C_9H_{19}$.

Dans les formules qui précèdent, les groupes éthylène-oxyles peuvent être en partie remplacés par des groupes propylène-oxyles. Il est toutefois souhaitable dans ce cas, que les composés comprennent majoritairement des groupes éthylène-oxyles.

Des tensio-actifs tout à fait avantageux pour l'utilisation selon la présente invention sont par exemple choisis parmi les Rhodafac® RE 610, RS 610, RS 610 LN, RS 710, SS 610, et les mélanges de deux ou plusieurs d'entre eux en toutes proportions.

La classification périodique des éléments utilisée dans la présente demande est celle du supplément au Bulletin de la Société Chimique de France, janvier 1966, n° 1.

La fonctionnalisation éventuelle des alcoylènes et notamment méthylènes ($X_1$, $X'_1$, $X_2$ et $X'_2$) est faite par des fonctions hydrophiles (amines tertiaires et autres fonctions anioniques y compris celles qui sont décrites ci-dessus sous la forme $-[E(O)_m(O^-)_p]-$).

Le contre-cation est avantageusement monovalent et est choisi parmi les cations minéraux et les cations organiques, avantageusement non nucléophiles, de nature quaternaire ou tertiaire, notamment les "oniums" de la colonne V de la classification périodique des éléments, tels que phosphonium, ammonium, ou de la colonne VI de ladite classification, tels que sulfonium et autres, et leurs mélanges.

On préfère les contre-cations de type ammonium, issus d'une amine, avantageusement tertiaire. On préfère en outre éviter que le cation organique présente un hydrogène réactif avec la fonction isocyanate.

Ces amines tertiaires peuvent éventuellement posséder des propriétés de protection aux rayonnements ultra violet (UV) telles que les amines connues sous la dénomination "amines de Hals", et, à titre d'exemple, on peut citer la N, 2, 2, 6, 6-penta-méthylpipéridine.

Les cations minéraux peuvent être séquestrés par des agents de transfert de phases comme les éthers couronnes.

Le pKa des cations organiques ou minéraux est avantageusement compris entre 8 et 12.

Les amines tertiaires présentant au plus 12 atomes, avantageusement au plus 10 atomes, de préférence au plus 8 atomes de carbone par fonction "onium" (rappelons qu'il est préféré qu'il n'y en ait qu'une par molécule), sont préférées. À titre d'exemples, on peut notamment citer la N, N-diméthylcyclohexylamine et la tributylamine.

Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagit pas avec les fonctions isocyanates.

Lorsque la composition selon l'invention comprend le tensio-actif sous forme anionique, celui-ci est susceptible de réagir avec les fonctions isocyanates. Il peut ainsi être avantageux d'utiliser le tensio-actif anionique selon la présente invention sous une forme neutralisée, de sorte que le pH induit lors d'une dissolution ou d'une mise en contact dans l'eau soit au moins égal à 3, avantageusement à 4, de préférence à 5 et au plus égal à 12, avantageusement à 11, de préférence à 10.

Lorsque E représente le phosphore, il est souhaitable d'utiliser des mélanges de monoester et de diester dans un rapport molaire compris entre 1/10 et 10, avantageusement entre 1/4 et 4. De tels mélanges peuvent en outre comporter de 1% jusqu'à environ 20%, mais de manière préférée pas plus de 10%, en masse d'acide phosphorique, et de 0 à 5% d'esters de l'acide pyrophosphorique. L'acide phosphorique est avantageusement salifié, au moins en partie, de manière à être dans les zones de pH préconisées.

Dans les mono- et di-esters, une partie des groupes éthylène-oxyles peut être remplacée par des groupes propylène-oxyles. On préfère néanmoins que les groupes éthylène-oxyles soient majoritaires.

La présence de composés triester est possible, à la condition que ces composés ne soient pas trop légers. En général, au moins une des trois fonctions esters doit avoir un nombre de carbone supérieur à 5, de préférence supérieur à 6, ou au moins deux des trois fonctions esters doit avoir un nombre de carbone supérieur à 2.

Les tensio-actifs de formule (I) précédemment définie peuvent être gardés sous leur forme acide (la charge $O^-$ étant alors remplacée par le groupe OH), s'ils sont introduits dans la formulation de polyisocyanate après la réaction de masquage des fonctions isocyanates.

Selon un autre mode de réalisation, l'agent tensio-actif est un tensio-actif non ionique.

En général, lorsqu'on utilise un tensio-actif non ionique, il possède des groupes hydrophiles tels que, par exemple, des groupes éthylène-oxyles en nombre suffisant, généralement supérieur à environ 10. Ce tensio-actif possède également une partie hydrophobe qui peut être choisie parmi les groupes aromatiques porteurs de chaînes aliphatiques ou simplement parmi des chaînes aliphatiques à nombre de carbones compris entre 8 et 50. D'autres motifs hydrophobes tels que des motifs silicones ou fluorés peuvent également être utilisés pour des applications particulières.

On peut citer à titre d'exemples non limitatifs les dérivés des esters polyoxyalcoylène des acides gras, des alcoylphénols éthoxylés, des esters-phosphates à chaîne poly alcoyloxy alcoylène glycol (tels que les poly-éthoxy et/ou propoxy éthylène glycol, par exemple), et les tristyrylphénols à chaîne polyoxydes d'éthylène.

On préfère en particulier un tensio-actif choisi parmi un des condensats de poly(oxyde d'éthylène) et/ou de poly(oxyde de propylène) avec des alcools, des polyols, des alkylphénols, des esters d'acides gras, des amides d'acides gras et des amines grasses, et des sucres, notamment les esters de sucres.

On peut également, dans le cadre de l'invention, utiliser un mélange de tensio-actifs anioniques (neutralisés ou non) et/ou non ioniques.

Comme indiqué précédemment, la présence de tensio-actif dans la composition selon l'invention permet d'augmenter la nature hydrophile du(des) polyisocyanate(s) hydrophobes présents dans la composition polyisocyanate, afin de pouvoir assurer un mélange homogène de cette composition de durcisseur avec la formulation pour revêtement.

En règle générale, la quantité d'agent tensio-actif ou du mélange de tensio-actifs est relativement faible par rapport à la composition de polyisocyanates. Cette quantité est avantageusement inférieure à 25% en poids par rapport à la composition de polyisocyanates, de préférence inférieure à 20% en poids, et de préférence encore inférieure à 15%. Elle est au moins égale à 1 %, de préférence au moins égale à 2%, par rapport au poids de la composition de polyisocyanates.

Ainsi, le rapport massique entre la composition de polyisocyanates et ledit ou lesdits tensio-actif(s) est avantageusement compris entre 1% et 30%, de préférence entre 2% et 20%, par exemple entre 3% et 12%.

La composition de polyisocyanates comprise dans la composition selon la présente invention consiste en tout isocyanate et polyisocyanate, seul ou en mélange avec un ou plusieurs autres isocyanates et/ou polyisocyanates. Le terme "polyisocyanate" doit être compris ici comme regroupant les termes "isocyanate" et "polyisocyanate".

Les polyisocyanates préférés sont choisis parmi les produits d'homo- ou d'hétéro-condensation d'alcoylènedi-isocyanate, comprenant notamment des produits du type "biuret" et du type "trimères", voire "prépolymères" à fonction isocyanate, et parmi les mélanges en contenant.

Les composés polyisocyanates peuvent également comporter des fonctions carbamates vraies (R-O-C(=O)-$NH_2$) ou des fonctions époxy ou des fonctions carbonates de préférence cycliques.

Il peut s'agir, par exemple, des polyisocyanates commercialisés par la Société Rhodia sous la dénomination "Tolonate®".

De manière générale, les polyisocyanates préférés sont les produits d'homo- ou d'hétéro-condensation des monomères isocyanates aliphatiques, cyclo-aliphatiques ou arylaliphatiques suivants :

- 1, 6-hexaméthylène di-isocyanate,
- 1, 12-dodécane di-isocyanate,
- cyclobutane-1, 3-di-isocyanate,
- cyclohexane-1, 3 et/ou 1, 4-di-isocyanate,
- 1-isocyanato-3, 3, 5-triméthyl-5-diisocyanatométhylcyclohexane (isophorone di-isocyanate, IPDI),
- les isocyanatométhyloctylènedi-isocyanate (TTI), notamment le 4-isocyanatométhyl-1, 8-octylènedi-isocyanate,
- 2, 4 et/ou 2, 6-hexahydrotoluylène di-isocyanate ($H_6TDI$),
- hexahydro-1, 3 et/ou 1, 4-phénylène di-isocyanate,
- perhydro 2, 4' et/ou 4, 4'-diphénylméthane di-isocyanate ($H_{12}MDI$), et en général les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylylène di-isocyanate (TMXDI), et
- le lysine di-isocyanate ainsi que les esters de la lysine di- ou tri-isocyanate (LDI ou LTI).

Parmi les isocyanates listés ci-dessus, on préfère notamment le HDI.

Les produits d'homo-condensation sont les produits issus de la condensation d'un des monomères isocyanates, listés ci-dessus, avec lui-même. Les produits d'hétéro-condensation sont les produits issus de la condensation de deux ou plusieurs des monomères listés ci-dessus, entre eux et/ou éventuellement avec un ou plusieurs composés à hydrogène mobile, tels que par exemple un alcool, un diol, une amine, et autres composés analogues.

Les polyisocyanates compris dans la composition de la présente invention peuvent également être des dérivés polyisocyanates issus d'isocyanates aromatiques utilisés seuls ou en mélange avec des composés aliphatiques.

Toutefois l'utilisation de ces dérivés aromatiques est limitée en quantité voire n'est pas préférée car elle conduit généralement à des revêtements qui peuvent subir une coloration, en général un jaunissement, au cours du vieillissement, notamment si les revêtements sont fortement exposés aux rayonnements ultra violet, par exemple le rayonnement ultra violet solaire.

À titre d'exemples d'isocyanates aromatiques, on peut citer de manière non limitative:

- le 2, 4- et/ou le 2, 6-toluylène di-isocyanate,
- le diphénylméthane-2, 4' et/ou 4, 4'-di-isocyanate (MDI),
- le 1, 3- et/ou le 1, 4-phénylène di-isocyanate,
- le triphénylméthane-4, 4', 4"-triisocyanate, et
- les oligomères du MDI, ou TDI.

Des mélanges de ces polyisocyanates (cyclo) aliphatiques et/ou aromatiques peuvent aussi être utilisés.

Comme indiqué précédemment, la composition de durcisseur de type polyisocyanate hydrophile, conformément à l'utilisation selon la présente invention, comprend au moins un polyisocyanate hydrophobe, ledit polyisocyanate hydrophobe comportant une ou plusieurs fonctions allophanates, lesdites fonctions allophanates étant présentes dans ladite composition de durcisseur de type polyisocyanate hydrophile en une quantité au moins égale à 6% molaire, avantageusement au moins 8% molaire, par rapport au nombre total de moles de monomères isocyanate transformés dans la préparation de la composition de durcisseur. Cette quantité est généralement inférieure ou égale à 30%, de préférence inférieure ou égale à 25% molaire.

Les composés porteurs de fonction allophanate(s) sont obtenus selon des méthodes classiques bien connues de l'homme du métier, c'est-à-dire par réaction d'au moins un composé porteur d'une fonction hydroxyle (tel que alcool, diol, et autres) et d'au moins un isocyanate hydrophobe ou polyisocyanate hydrophobe, tels qu'ils ont été précédemment définis, généralement en présence d'un catalyseur.

À titre d'exemple, les allophanates peuvent avantageusement être préparés soit directement à partir d'un isocyanate et de l'alcool désiré, par chauffage en présence d'un catalyseur de type dilaurate de dibutylétain (comme indiqué dans la demande de brevet WO 99/55756), soit à partir d'un isocyanate et de l'alcool désiré, par modification des conditions de trimérisation par des hydroxydes d'ammonium quaternaires (comme indiqué dans la demande de brevet EP 0 524 500).

On préfère, pour les besoins de la présente invention, les composés porteurs de fonction(s) allophanate obtenus à partir d'au moins un polyisocyanate et d'au moins un monoalcool, de préférence d'alcool alkylique, linéaire, ramifié ou cyclique, comportant de 1 à 20 atomes de carbone, avantageusement de 1 à 16 atomes de carbone, plus

particulièrement de 1 à 12 atomes de carbone, par exemple méthanol, éthanol, 1-propanol, 2-propanol, butanol, pentanol, hexanol, cyclohexanol, 2-éthylhexanol, décanol, et autres.

Les polyisocyanates utilisés pour la préparation des composés porteurs de fonction(s) allophanate sont des polyisocyanates hydrophobes, comportant éventuellement une ou plusieurs fonctions choisies parmi diazétidine-dione, oxadiazinetrione, imino-dimère, imino-trimère (iminotriazadione), imino-oxadiazinedione (ou trimère asymétrique), isocyanurate, biuret, urée, uréthane, et leurs mélanges.

De préférence, les polyisocyanates utilisés pour la préparation des composés porteurs de fonction(s) allophanate sont des polyisocyanates hydrophobes, comportant des produits de cyclotrimérisation de polyisocyanates, en particulier de diisocyanates.

On préfère tout particulièrement les composés porteurs de fonction(s) allophanate obtenus à partir des produits d'homo-condensation et/ou d'hétéro-condensation de monomère(s) isocyanate aliphatique(s), en particulier non cyclique, de préférence le HDI et/ou de l'isocyanurate d'HDI, encore dénommé HDT.

On préfère en outre les composés porteurs de fonction(s) allophanate obtenus à partir des produits d'homo-condensation et/ou d'hétéro-condensation de monomère(s) isocyanate aliphatique(s), en particulier non cyclique, de préférence le HDI et/ou de l'isocyanurate d'HDI, encore dénommé HDT, avec un monoalcool, linéaire, ramifié ou cyclique, tel que défini précédemment.

À titre purement illustratif, le schéma ci-dessous montre des polyisocyanates hydrophobes porteurs de fonction allophanate, obtenus par réaction entre un alcool et l'HDI d'une part et l'HDT d'autre part :

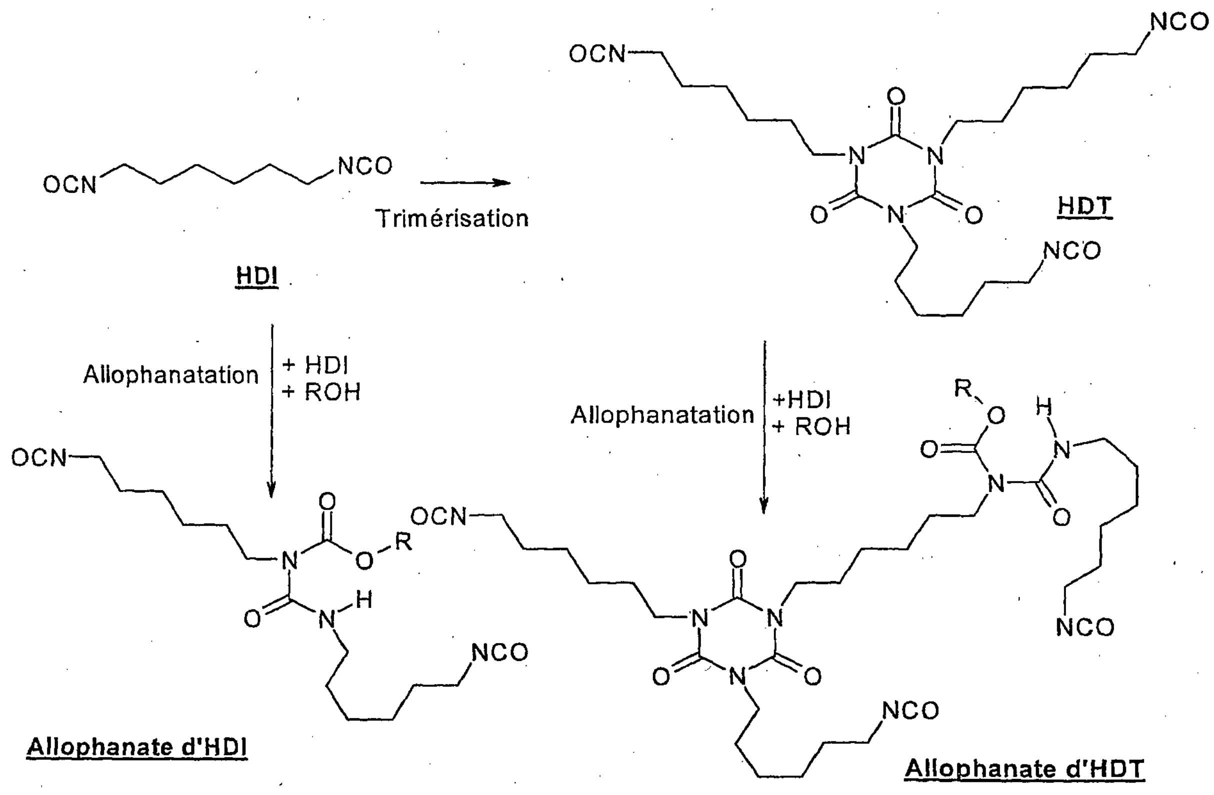


La quantité de fonctions allophanate est mesurée en calculant le pourcentage molaire des fonctions allophanate, par rapport au nombre de moles d'isocyanate de départ transformé. Par exemple, dans le schéma précédent, l'allophanate d'HDT possède 1 mole de fonction allophanate, pour 4 moles de monomère transformé, ce qui représente une quantité égale à 25% molaire de fonctions allophanate par rapport au nombre de moles de monomère transformé. Cette détermination est effectuée par RMN du carbone. Pour les compositions de durcisseur convenables pour l'utilisation selon l'invention, le pourcentage molaire tient compte en outre du nombre de moles de monomères transformés pour la formation des polyisocyanates hydrophiles.

Les compositions de durcisseur de type polyisocyanate pour revêtement selon l'invention, présentent une fonctionnalité moyenne en fonctions isocyanates supérieure à 2 et au plus égale à 10, de préférence supérieure à 2, 5 et au plus égale à 8 avantageusement comprise entre 2, 8 et 6, 5.

Dans toute la présente description, la fonctionnalité est exprimée en masse, comme il est d'usage dans ce domaine ; cette fonctionnalité est obtenue en multipliant le pourcentage pondéral de chaque oligomère de la composition

par sa fonctionnalité propre, puis en sommant les fonctionnalités apportées par chaque oligomère. Le total représente la fonctionnalité moyenne de la composition.

Dans la présente invention, on définit également le taux de fonctions isocyanate (Tx(NCO)), exprimé en pourcentage massique, d'une composition. Ce taux est égal au nombre de moles de NCO pour 100 g de ladite composition multiplié par 42, 02 (masse molaire de la fonction isocyanate). Le nombre de moles de NCO est déterminé par des méthodes de dosages classiques, connues de l'homme du métier, et par exemple par dosage potentiométrique à la dibutylamine.

La viscosité des composés polyisocyanates non masqués utiles à l'invention est située dans une plage de viscosité très large de par la structure des composés polyisocyanates qui peuvent être mis en jeu. La viscosité est généralement supérieure à 10 mPa•s, à 25°C à 100% d'extrait sec, plus généralement supérieure à 100 mPa•s, à 25°C et à 100% d'extrait sec.

En règle générale, la viscosité des polyisocyanates est inférieure à 5000 mPa.s, à 25°C et à 100% d'extrait sec, plus généralement encore inférieure à 3500 mPa.s, à 25°C et à 100% d'extrait sec. Des résultats tout à fait satisfaisants ont été obtenus avec des polyisocyanates de viscosité inférieure à 2000 mPa.s, à 25°C et à 100% d'extrait sec.

Il convient donc de noter que l'ajout de composés porteurs de fonction(s) allophanate permet d'atteindre un compromis tout à fait satisfaisant entre viscosité et brillance du revêtement durci final.

Les polyisocyanates présents dans la composition selon l'invention peuvent se présenter sous forme masquée, c'est-à-dire que les fonctions isocyanate ne sont pas libres, mais masquées à l'aide d'un agent masquant ou d'un mélange d'agents masquants. On préfère notamment l'utilisation de compositions de (poly) isocyanates masqués pour l'élaboration d'une formulation de revêtement de type mono-composant (formulation 1K) :

Dans le présent exposé, on entend par polyisocyanate masqué un polyisocyanate pour lequel au moins 50%, de préférence 80%, avantageusement 90% et plus préférentiellement encore toutes les fonctions isocyanate sont masquées.

Les polyisocyanates hydrophiles comprenant des polyisocyanates hydrophobes porteurs de fonctions allophanate, tels qu'ils viennent d'être définis, sont utilisés, en formulation en phase aqueuse, comme durcisseurs de compositions qui vont être maintenant définies, pour la préparation de revêtement de type polyuréthane.

Les compositions (ou simplement « résines » dans la suite du présent exposé) convenables pour la préparation d'une formulation de revêtement polyuréthane en phase aqueuse, avec les durcisseurs définis ci-dessus, peuvent être des compositions polyuréthane, et/ou des compositions comprenant des composés susceptibles de réagir avec les fonctions isocyanate des durcisseurs, pour former des groupements polyuréthane.

Parmi les compositions polyuréthane, on préfère les compositions polyuréthane en dispersion comportant éventuellement des fonctions à hydrogène mobile ; on peut citer, à titre d'exemples non-limitatifs, les résines polyuréthane, les dispersions aqueuses polyéther-polyuréthane, telle la résine U 205 commercialisée par Alberdingk & Boley.

Les composés susceptibles de réagir avec les fonctions isocyanate des durcisseurs sont les composés connus de l'homme du métier et possèdent de préférence au moins deux atomes d'hydrogène mobiles, jusqu'à une vingtaine d'atomes d'hydrogène mobiles par molécule.

Ces composés à hydrogène mobile sont généralement des polymères contenant deux ou plus fonctions hydroxyle (alcool ou phénol) et/ou fonctions thiol et/ou fonctions amines primaires ou secondaires et/ou contenant des fonctions précurseurs telles que par exemple des fonctions époxy ou carbonates qui, par réaction avec un nucléophile adéquat (une amine ou l'eau par exemple), libèrent les fonctions hydroxyles.

De préférence les composés sont choisis parmi les polyols qui peuvent être utilisés seuls ou en mélange.

Les polyols utilisés dans les formulations de l'invention sont avantageusement choisis parmi les polymères acryliques ou polyesters ou polyuréthanes ou polyéthers.

Les polyols polyesters sont industriels et leur synthèse est largement décrite et connue de l'homme de l'art. Elle ne sera donc pas décrite dans ce document. Pour plus de détails, on pourra se reporter aux ouvrages suivants : « Matériaux polymères, structure, propriétés et applications » de Gottfried W. Ehrenstein et Fabienne Montagne édité en 2000 chez Hermès Science ; « Handbook of Polyuréthanes » de Michael Szycher, édité en 1999 chez CRC press ; « Resins for coatings, Chemistry, Properties and Applications » de D. Stoye and W. Freitag, édité chez Hanser en 1996, ainsi que l'article d'Eurocoat 97 préalablement cité. On peut également consulter les catalogues commerciaux des sociétés distributrices de polyols notamment le livre intitulé « Specialty Resins, creating the solution together » de la société AKZO NOBEL RESINS édité en février 2001.

La fonctionnalité moyenne en fonctions hydroxyles des polymères polyols est au moins égale à 2, en général comprise entre 3 et 20.

La définition de la fonctionnalité moyenne en fonctions hydroxyles par chaîne polymère est par exemple donnée dans l'article de Ben Van Leeuwen « High solids hydroxy acrylics and tightly controled molecular weight » paru dans le recueil de conférences de Eurocoat 1997 (pp 505- 515) en page 507.

Cette fonctionnalité moyenne F(OH) se calcule à l'aide de l'équation suivante :

$$F(OH) = \frac{(\text{Nombre OH}) \times Mn}{56 \times 100}$$

dans laquelle :

- F(OH) représente la fonctionnalité moyenne en fonctions hydroxyle ;
- Nombre OH représente le titre en fonctions hydroxyle exprimé en mg de KOH (hydroxyde de potassium) par gramme de polymère ;
- Mn représente la masse moléculaire moyenne en nombre du polymère, elle-même déterminée par chromatographie de perméation de gel (GPC), par comparaison avec des étalons de polystyrène calibrés.

La masse moléculaire moyenne en nombre des polyols polyesters utilisés dans la composition de l'invention est généralement comprise entre 500 et 10 000 de préférence entre 600 et 4 000.

Dans certains cas on peut aussi utiliser un polyol ou un mélange de polyols polyacryliques qui confèrent une dureté plus élevée au revêtement. Ces polyols peuvent être « durs » ou « souples » selon que l'on utilise des monomères présentant respectivement un caractère aromatique et/ou cycloaliphatique et/ou fortement ramifié pour cette propriété « dure » et des monomères présentant majoritairement un caractère aliphatique pour la propriété « souple ».

La synthèse des polyols acryliques est également connue de l'homme de l'art et on pourra consulter les livres préalablement cités pour avoir plus de détail sur leurs synthèses.

La masse moléculaire moyenne en nombre pour les polyols acryliques est généralement comprise entre 134 et 50 000, de préférence entre 500 et 25 000, avantageusement entre 1 000 et 15 000.

Le titre en fonctions hydroxyles est généralement compris entre 10 et 750 mg de KOH par gramme de polymère, de préférence compris entre 15 et 500 mg de KOH par gramme de polymère.

À titre d'exemple de polyols acryliques, on peut se reporter à l'article de Rhodocoat 97 préalablement cité, en page 515, où sont indiquées les caractéristiques de quelques polyols acryliques, ces exemples n'ayant pas un caractère limitatif.

On peut aussi utiliser des polyols hyperbranchés qui se caractérisent généralement par une fonctionnalité plus élevée que les polyols linéaires, mais ces produits ne sont pas préféré compte tenu de la viscosité élevée de ces produits.

Des polyols structurés ou à blocs peuvent aussi être utilisés si l'on cherche un effet de compartimentation de propriété. Toutefois ces produits, généralement plus coûteux, ne sont utilisés que pour apporter une propriété particulière. Ces composés sont par exemple un agent de rhéologie ou un agent d'aide à la dispersion de pigments.

En règle générale, pour les besoins de la présente invention, la quantité de durcisseur par rapport à la résine est compris entre 3% et 30% en poids, de préférence entre 5% et 20% en poids, avantageusement entre 5% et 15% en poids. Toutefois, pour certaines applications, on peut utiliser d'autres ratios, par exemple 1 % en poids de durcisseur par rapport à la résine, ou encore 400% en poids de durcisseurs par rapport à la résine.

Lorsque la résine comprend des fonctions à hydrogène mobile, la ratio massique (fonctions isocyanate de la composition de durcisseur) / (fonctions à hydrogène mobile) est généralement compris entre 2 et 0, 5, de préférence entre 1, 5 et 0, 8. En particulier, lorsque le composé à hydrogène mobile est un polyol, le ratio fonctions isocyanate / fonctions hydroxyle est compris entre 2 et 0, 5, de préférence entre 1, 5 et 0, 8.

L'invention concerne en outre le procédé de préparation d'un revêtement « haute brillance », tel que défini précédemment comprenant au moins une composition de durcisseur de type polyisocyanate exposée *supra,* ledit polyisocyanate étant hydrophile et comprenant au moins un polyisocyanate hydrophobe à fonctions allophanate, lesdites fonctions allophanate étant présentes en une quantité égale ou supérieure à 6% molaire, par rapport au nombre de moles de monomères isocyanate transformés pour la préparation de ladite composition de durcisseur hydrophile.

Le procédé comprend les étapes de mélanges des divers composants du revêtement selon des techniques classiques connues dans ce domaine, et peuvent par exemple être effectués au moyen de mélangeurs traditionnels, tels que mélangeurs, malaxeurs broyeurs, selon la viscosité des divers composants et le type de revêtement souhaité. Il doit être cependant compris que les mélanges peuvent être effectués juste avant l'application du revêtement, ou bien encore sous forme d'une formulation prête à l'emploi (formulation mono-composant, ou encore formulation 1 K). On préfère toutefois les formulations bi-composant (2K).

En outre, il peut être avantageux de réaliser des pré-mélanges séparés de seulement deux ou trois des composants de la formulation de revêtement, puis de réaliser le mélange de deux ou trois pré-mélanges (formulations 2K ou 3K) juste avant emploi.

Selon une alternative, le tensio-actif ou le mélange de tensio-actifs peut aussi être incorporé directement à la composition de revêtement ou être apporté par un des autres composants dudit revêtement, à savoir avec le polyol, avec le ou les pigments s'il s'agit d'une peinture, ou avec les additifs ou avec tout autre composant de la composition

de revêtement finale.

De manière préférée, ledit tensio-actif est incorporé dans le durcisseur polyisocyanate. L'homme du métier, spécialiste de formulations, est à même de déterminer le mode d'introduction du ou des tensio-actifs, de manière à obtenir la composition selon l'invention sous forme de solution.

La présente invention concerne également les substrats revêtus par la composition de revêtement définie précédemment. Le substrat peut être de tout type, par exemple bois, verre, métal, ciment, polymère thermoplastique ou thermodurcissable (matériau plastique), comprenant le cas échéant des charges, par exemple des charges de renfort, comme par exemple des fibres de verre, de carbone, et autres. Le substrat est généralement un substrat pour sols (ou « flooring » en langue anglaise), et avantageusement un substrat en bois pour sols, par exemple un parquet.

Les exemples illustrant l'invention sont présentés dans la partie expérimentale ci après et ne sont pas limitatifs de cette invention.

**Partie expérimentale**

**<u>Préparation de durcisseurs hydrophiles polyisocyanate</u>**

a) <u>Préparation des polyisocyanates hydrophobes à fonctions allophanate</u>

On prépare trois compositions de polyisocyanates comprenant des quantités variables de fonctions allophanates selon le mode opératoire suivant : dans un réacteur de 1 L, muni d'une agitation mécanique et sous atmosphère inerte, on introduit 300g d'hexaméthylène-diisocyanate (HDI). On porte la température à 85°C, et on coule progressivement une solution de choline dans le butanol. La quantité finale de choline introduite est de 200 ppm. On maintient la température de réaction à 85°C, et on laisse la réaction évoluer jusqu'au taux de transformation (TT) désiré. Le brut réactionnel est ensuite purifié par distillations successives, afin d'obtenir un taux d'HDI résiduel aussi bas que possible.

Pour chacune des trois compositions, la quantité de butanol et le taux de transformation sont rassemblés dans le tableau (1) :

**<u>- Tableau (1) -</u>**

| *Produit* | *Butanol introduit*(1) | *Allophanate*(2) | *Trimère*(3) | *TT final* |
|---|---|---|---|---|
| Composition A | 4% | 13% | 36% | 52% |
| Composition B | 9.5% | 19% | 25% | 64% |
| Composition C | 15% | 24% | 20% | 70% |
| (1) : taux de butanol introduit exprimé en moles de butanol/moles totales d'HDI ;<br>(2) : taux d'allophanate d'HDI, mesuré par GPC (Chromatographie par perméation de gel).<br>(3) : taux de trimère vrai de type isocyanurate, mesuré par GPC. | | | | |

Les caractéristiques des compositions sont présentées dans le tableau (2). À titre de comparaison, on utilise le Tolonate® HDT (hexaméthylène diisocyanate, trimère) de la société Rhodia et le Desmodur® N 3300, commercialisé par la société Bayer, dont les caractéristiques sont également présentées dans le même tableau.

**<u>- Tableau (2) -</u>**

| | *Tx(NCO)* | *Viscosité (mPa.s)* | *% molaire / HDI transformé* | | *% HDI* |
|---|---|---|---|---|---|
| | | | *allophanates* | *carbamates* | |
| Composition A | 20,6% | 1998 | 8,2 | 0 | 0,28 |
| Composition B | 19,8% | 1428 | 14,7 | 0 | 1,7 |
| Composition C | 18,1% | 1310 | 22,2 | 0,7 | 0,44 |
| Tolonate® HDT | 21,6% | 2400 | ~2 | 0,3 | 0,15 |
| Desmodur® N3300 | 21,8% | 2400 | ~5 | 0,2 | < 0,2 |

b) Préparation des polyisocyanates hydrophiles selon l'invention

On prépare un mélange neutralisé de tensio-actifs TA1 contenant (% pondéraux) :

- 17,4% de N,N-diméthylcyclohexylamine (DMCHA ; n° CAS 98-94-2); et
- 82,6% de tensio-actif polyoxyéthylène tridécyl éther phosphate.

L'ensemble est homogénéisé une nuit sur un roule-pot. Le lendemain, à 17, 7 g de chacune des compositions A, B, C et Tolonate® HDT, on ajoute 2, 3 g du mélange neutralisé de tensioactifs décrit ci-dessus.

On obtient respectivement 3 compositions polyisocyanate hydrophiles comportant des motifs allophanates référencées $A_H$, $B_H$ et $C_H$ et une composition de référence $HDT_H$, à titre de comparaison.

c) Préparation d'un vernis

La veille de la préparation du vernis, on prépare une Partie A1 contenant :

- 176 g de Setalux® C6511 AQ 47 (émulsion acrylique commercialisée par Akzo Nobel);
- 0,05 g d'additif réduisant la tension superficielle BYK 306 ;
- 1,5 g de Tinuvin® 292 (agent stabilisant à la lumière, commercialisé par CIBA™);
- 1 g de Solvesso® 100 (solvant à base d'hydrocarbures, commercialisé par ExxonMobil) ; et
- 20 g d'eau déminéralisée.

Le jour de l'essai, dans 10 g de Partie A1 sont ajoutés 4 g d'eau déminéralisée (2 g pour le vernis B1) et 4, 5 g d'une des compositions polyisocyanate hydrophiles, comportant des motifs allophanate, référencées $A_H$, $B_H$, $C_H$ et $HDT_H$ à 75% en poids dans l'acétate de méthoxypropyle (AMP ; n° CAS 108-65-6).

On obtient respectivement 4 compositions de vernis : Vernis A, Vernis B, Vernis B', Vernis C, et un Vernis (HDT). La composition de chacun des vernis est résumée dans le tableau (3) suivant :

**- Tableau (3) -**

| *Vernis* | *Partie A1* | *Eau* | *Polyisocyanate hydrophile* | *Quantité de polyisocyanate* |
|---|---|---|---|---|
| Vernis A | 10 g | 4 g | Composition $A_H$ | 4,5 g à 75% dans AMP |
| Vernis B | 10 g | 2 g | Composition $B_H$ | 4,5 g à 75% dans AMP |
| Vernis B' | 10 g | 4 g | Composition $B_H$ | 4,5 g à 75% dans AMP |
| Vernis C | 10 g | 4 g | Composition $C_H$ | 4,5 g à 75% dans AMP |
| Vernis (HDT) | 10 g | 4 g | Composition $HDT_H$ | 4,5 g à 75% dans AMP |

**Détermination du voile sur plaque de verre**

On applique chacun des vernis obtenus sur plaque de verre avec un tire-film automatique, cale de 200 µm humide. Après un flash-off de 15 mn, on effectue une cuisson à 60°C pendant 35 mn. On détermine le voile après 7 jours.

On obtient un voile d'environ 20 HU (« Haze Unit », mesuré à l'aide d'un brillancemètre Erichsen, type Microhaze 20°) pour chacun des revêtements obtenus à partir des compositions Vernis A, B, B' et C, alors que le revêtement réalisé à partir du Vernis (HDT) présente un voile de 48 HU.

Les résultats sont rassemblés dans le tableau (4) :

**- Tableau (4 -**

| *Vernis* | *Voile (HU)* | *Épaisseur (µm)* |
|---|---|---|
| Vernis B | 22 | 43 |
| Vernis B' | 22 | 43 |
| Vernis C | 20 | 42 |
| Vernis (HDT) | 48 | 44 |

**Détermination de la brillance sur substrat verre (Vernis PUD)**

a) Préparation des polyisocyanates hydrophiles selon l'invention

On utilise les mêmes polyisocyanates hydrophobes que ceux décrits précédemment. 17, 7 g de chacun des polyisocyanates sont homogénéisés durant une nuit sur des roule-pots avec 2, 3 g du mélange neutralisé de tensioactifs TA1.

Aux 20 g des différentes compositions obtenues, sont ajoutés 8, 57g de diméthyléther diethylène glycol (DMM ; n° CAS 111109-77-4) afin d'avoir des solutions à 70% d'extrait sec.

b) Préparation d'un vernis

La veille de la préparation du vernis, on prépare une Partie A2 de la façon suivante: on mélange tout d'abord :

- 3 g d'agent anti-mousse BYK 028 ;
- 3 g d'additif améliorant le mouillage sur support BYK 348 ; et
- 28 g d'acétate de butylglycol (BGA; n° CAS 112-07-2).

Ensuite, dans 75 g de résine U 205 (dispersion aqueuse de polyéther-polyuréthane aliphatique sans solvant ni groupement isocyanate libre, Extrait Sec: 40%, viscosité : 20-200 mPa.s, de la société Alberdingk & Boley), sont dispersés 6 g du mélange précédent, à l'aide d'un disperseur type Dispermat (500 tr/mn). On complète enfin l'ensemble par 69g de résine U205 pour obtenir 150 g de Partie A2.

Dans 20 g de Partie A2 sont ajoutés 2 g des mélanges de durcisseur (à 70% dans DMM). On obtient respectivement les vernis Vernis A2, Vernis B2, Vernis C2, et Vernis (HDT) 2. Le tout est homogénéisé à la spatule, puis appliqué sur une plaque de verre avec le tire-film automatique pour une épaisseur humide de 200 μm. On réalise également un essai à partir d'une composition de Partie A2 seule (sans durcisseur).

Après séchage dans la salle conditionnée, en atmosphère contrôlée (23°C, humidité relative : 50%), les feuils sont analysés à J+7 en brillance, à l'aide d'un brillancemètre Erichsen (type Minigloss Master Model 540 ou Microhaze 20°). Les résultats sont rassemblés dans le tableau (5) :

**- Tableau (5) -**

| Produit | | Vernis A2 | Vernis B2 | Vernis C2 | Vernis (HDT)2 | Partie A2 seule |
|---|---|---|---|---|---|---|
| Épaisseur (μm) | | 40 | 38 | 31 | 31 | 39 |
| Brillance | Voile | 85 | 148 | 69 | 272 | 24 |
| | 20° | 72 | 62 | 75 | 41 | 79 |
| | 60° | 86 | 82 | 87 | 71 | 89 |

On observe une nette amélioration de la brillance des revêtements: la brillance de la partie A2 seule est retrouvée avec les compositions de durcisseurs comportant des motifs allophanates, alors que cette brillance est fortement dégradée lors de l'utilisation de compositions HDT Rhodia ne contenant pas de foncions allophanates.

**Détermination de la brillance sur substrat verre et substrat bois (Vernis PUD)**

a) Préparation des polyisocyanates hydrophiles selon l'invention

On utilise les polyisocyanates hydrophobes (à fonctions allophanate) précédemment décrits Composition A, Composition C, Tolonate® HDT et Desmodur® N3300.

On prépare le mélange de tensioactifs TA1 décrit à l'exemple 1.

Après homogénéisation une nuit sur roule-pot, on ajoute 2, 3 g de ce mélange neutralisé de tensioactifs à 17, 7 g de chacune des compositions A, C, Tolonate® HDT et Desmodur® N 3300. Les durcisseurs sont constitués de 88, 5% des polyisocyanates hydrophobes et de 11, 5% du mélange de tensioactifs.

Aux 20 g des différents ci-dessus sont ajoutés 8, 57g de 3-éthoxy-propionate d'éthyle (EEP ; n° CAS 763-69-9), afin d'avoir des solutions à 70% d'extrait sec (soit 30% de solvant pour 70% d'un durcisseur phase aqueuse).

On obtient respectivement 4 compositions polyisocyanate hydrophiles comportant des motifs allophanates, référencées $A_{H3}$, $C_{H3}$, $HDT_{H3}$ et $N3300_{H3}$.

b) Préparation d'un vernis

La veille de la préparation du vernis, on prépare une Partie A3, à partir d'un premier mélange de :

- 234,6 g de résine Alberdingk & Boley U 915 (dispersion polyuréthane, Extrait Sec: 33-35%, viscosité : 30-100 mPa.s) ;
- 46,8 g d'eau ;
- 6,6 g d'Acrysol RM8 ; et
- 10, 4 g de BDG (Butyl diglycol ou [2-(2-butoxyéthoxy) éthanol], n° CAS 112-34-5).

L'ensemble est mélangé pendant 5 mn au Dispermat à 500 tr/mn.
On ajoute ensuite :

- 6,6 g d'agent anti-mousse BYK 028 ;
- 1,2 g d'additif améliorant le mouillage sur support BYK 348 ; et
- 270 g de résine U 915.

L'ensemble est à nouveau mélangé pendant 5 mn au Dispermat à 500 tr/mn. À cette Partie A3, on ajoute les durcisseurs $A_{H3}$, $C_{H3}$, $HDT_{H3}$ et $N3300_{H3}$ préparés précédemment, à raison de 1 part de durcisseur pour 9 part de Partie A3. On obtient respectivement les vernis Vernis A3, Vernis C3, Vernis (HDT) 3 et Vernis (N3300). On réalise également un essai à partir d'une composition de Partie A3 seule (vernis sans durcisseur).

c) Détermination de la brillance sur verre

On applique les vernis obtenus ci-dessus au tire-film avec cale de 200 µm sur plaque de verre. On mesure la brillance (voile (« haze » en langue anglaise), 60° et 20°) à 7 jours à laide d'un brillancemètre Erichsen, comme défini ci-dessus. On applique également les vernis obtenus ci-dessus au pinceau en 2 x 2 g sur plaques de bois de hêtre, de taille 10 cm x 15 cm chacune. On mesure la brillance à 7 jours.
Les résultats obtenus sont rassemblés dans le tableau (6) :

**- Tableau (6) -**

| Vernis | | $Vernis_{A3}$ | $Vernis_{C3}$ | $Vernis_{HDT3}$ | $Vernis_{N3300}$ | Vernis sans durcisseur |
|---|---|---|---|---|---|---|
| Partie A3 | | 10g | 10g | 10g | 10g | 10g |
| Durcisseur hydrophile | type | **A** | **C** | **HDT** | **N 3300** | **-** |
| | quantité | 1,1 g | 1,1 g | 1,1 g | 1,1 g | - |
| Eau (quantité en g) | | 4 | 4 | 4 | 4 | 4 |
| Brillance sur verre à j+8 | 60° | 91 | 94 | 77 | 77 | 92 |
| | 20° | 81 | 87 | 48 | 48 | 85 |
| | Voile | 31 | 25 | 270 | 250 | 27 |

Les deux vernis A3 et C3 donnent de meilleures propriétés de brillance que les vernis HDT3 et N 3300 sur plaque de verre.
Il convient de noter la faible brillance obtenue avec le durcisseur basé sur le Desmodur® N3300 qui contient 5% de motifs allophanate.

## Revendications

1. Utilisation d'une composition de durcisseur de type polyisocyanate hydrophile, comprenant au moins un polyisocyanate hydrophobe pour la préparation d'une formulalion de revêtement polyuréthane en phase aqueuse, ledit polyisocyanate hydrophobe comportant une ou plusieurs fonctions allophanates, lesdites fonctions allophanates étant présentes dans ladite composition de durcisseur en une quantité au moins égale à 6% molaire, avantageusement au moins 8% molaire, par rapport au nombre total de moles de monomères isocyanate transformés dans la préparation de la composition de durcisseur,
ledit durcisseur comprenant un agent tensio-actif anionique et/ou non ionique dont moins de 50%, avantageusement

moins de 20%, de préférence moins de 10% en masse est sous forme liée par l'intermédiaire d'une liaison chimique avec le polyisocyanate.

2. Utilisation selon la revendication 1 , dans laquelle la quantité de fonctions allophanate est inférieure ou égale à 30%, de préférence inférieure ou égale à 25% molaire par rapport au nombre total de moles de monomères isocyanate transformés dans la préparation de la composition de durcisseur.

3. Utilisation selon la revendication 1 ou 2, dans laquelle le polyisocyanate est choisi parmi les produits d'homo- ou d'hétéro-condensation d'alcoylènedi-isocyanate, comprenant notamment des produits du type "biuret" et du type "trimères", voire "prépolymères" à fonction isocyanate, parmi les dérivés polyisocyanates issus d'isocyanates aromatiques utilisés seuls ou en mélange avec des composés aliphatiques, et parmi les mélanges en contenant.

4. Utilisation selon l'une quelconque des revendications précédentes, dans laquelle les fonctions allophanate sont apportées par un allophanate d'au moins un polyisocyanate avec au moins un composé porteur d'une fonction hydroxyle, de préférence avec un monoalcool, de préférence encore un alcool alkylique, linéaire, ramifié ou cyclique, comportant de 1 à 20 atomes de carbone, avantageusement de 1 à 16 atomes de carbone, plus particulièrement de 1 à 12 atomes de carbone.

5. Utilisation selon l'une quelconque des revendications précédentes, dans laquelle les fonctions allophanate sont apportées par un allophanate choisi parmi les allophanates de polyisocyanates hydrophobes, comportant éventuellement une ou plusieurs fonctions choisies parmi diazétidine-dione, oxadiazinetrione, imino-dimère, imino-trimère (iminotriazadione), imino-oxadiazinedione (ou trimère asymétrique), isocyanurate, biuret, urée, uréthane, et leurs mélanges.

6. Utilisation selon l'une quelconque des revendications précédentes, dans laquelle les fonctions allophanate sont apportées par un allophanate de l'isocyanurate d'hexaméthylène di-isocyanate et/ou d'hexaméthylène di-isocyanate, avec un composé porteur d'une fonction hydroxyle, de préférence avec un monoalcool, de préférence encore un alcool alkylique, linéaire, ramifié ou cyclique, comportant de 1 à 20 atomes de carbone, avantageusement de 1 à 16 atomes de carbone, plus particulièrement de 1 à 12 atomes de carbone.

7. Utilisation selon l'une quelconque des revendications précédentes, dans laquelle l'agent tensio-actif anionique et/ou non ionique comprend un fragment de chaîne polyéthylène glycol et/ou propylène glycol d'au moins 1, avantageusement d'au moins 3, de préférence d'au moins 5 unités éthylène-oxyle et/ou propylène-oxyle.

8. Utilisation selon l'une quelconque des revendications 1 à 7, dans laquelle le tensio-actif répond à la formule (I) :

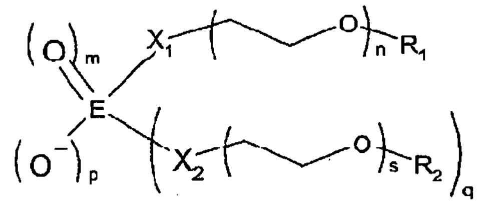

(I)

dans laquelle :

- E représente un élément choisi parmi le phosphore, le carbone et le soufre ;
- $R_1$ et $R_2$, identiques ou différents, représentent, indépendamment l'un de l'autre, un radical hydrocarboné, avantageusement choisi parmi les radicaux aryle en $C_6$-$C_{30}$ et les radicaux alcoyle en $C_1$-$C_{20}$, éventuellement substitués, avantageusement radicaux alcoyle en $C_{10}$-$C_{20}$ éventuellement substitués ;
- $X_1$ représente une liaison ou un radical bivalent choisi parmi $-Y_1-$, $-A_1-$, $-A_1-Y_1-$, $-Y_1-A_1-$, $-Y_1-A_1-Y'_1-$ et $-[E(O)_mC(O^-)_p]-$ ;
- $X_2$ représente une liaison ou un radical bivalent choisi parmi $-Y_2-$, $-A_2-$, $-A_2-Y_2-$, $-Y_2-A_2-$ et $-Y_2-A_2-Y'_2$ ;
- $A_1$ et $A_2$, identiques ou différents, représentent, indépendamment l'un de l'autre, un radical bivalent alcoylène éventuellement substitué, y compris fonctionnalisé, et par exemple éthylène ou méthylène ;
- $Y_1$, $Y'_1$, $Y_2$ et $Y'_2$, identiques ou différents, sont choisis parmi un chalcogène, avantageusement choisi parmi les plus légers à savoir le soufre et surtout l'oxygène, les éléments métalloïdes des rangs atomiques au plus égal à celui du phosphore et appartenant à la colonne VB de la classification tableau périodique des éléments,

sous la forme de dérivés d'amines ou de phosphines tertiaires, le radical assurant le caractère tertiaire étant avantageusement d'au plus 4 atomes de carbone, de préférence d'au plus 2 atomes de carbone ;
- m représente zéro ou un nombre entier égal à 1 ou à 2 ;
- n est zéro ou un entier choisi entre 1 et 30 avantageusement entre 5 et 25, de préférence entre 9 et 20 (intervalles fermés c'est-à-dire comprenant les bornes) ;
- p représente un entier égal à 1, 2 ou 3 ;
- q représente zéro ou 1 ; et
- s représente zéro ou un entier entre 1 et 30 avantageusement entre 5 et 25, de préférence entre 9 et 20 (intervalles fermés c'est-à-dire comprenant les bornes) ;

étant entendu que lorsque E représente l'atome de carbone, alors q est égal à zéro, m représente 1 et $X_1$ représente une liaison ou un radical bivalent choisi parmi $-A_1-$, $-Y_1$, $-A_1-Y_1-$, -O-C(=O) -O- et $-[C(O)_m(O^-)_p]-$.

**9.** Utilisation selon l'une quelconque des revendications 1 à 8, dans laquelle le tensio-actif possède la structure ($II_1$) ou la structure ($II_2$) :

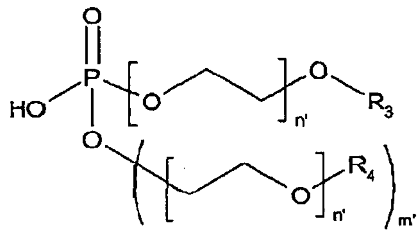
($II_1$)

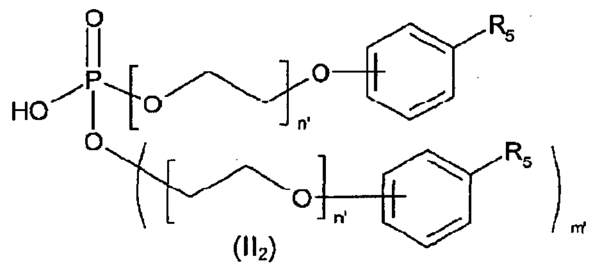
($II_2$)

structures dans lesquelles :

- n' représente un entier compris entre 5 et 12, bornes incluses ;
- m' représente 0 ou 1 ;
- $R_3$ et $R_4$, identiques ou différents, représentent indépendamment l'un de l'autre un radical alcoyle, linéaire ou ramifié, comportant de 10 à 20 atomes de carbone ; et
- $R_5$ représente un radical alcoyle, linéaire ou ramifié comportant de 6 à 12 atomes de carbone.

**10.** Utilisation selon l'une quelconque des revendications 1 à 7, dans laquelle le durcisseur comprend un agent tensio-actif non ionique, choisi parmi les dérivés des esters polyoxyalcoylène des acides gras, des alcoylphénols éthoxylés, des esters-phosphates à chaîne poly alcoyloxy alcoylène glycol (tels que les poly-éthoxy et/ ou propoxy éthylène glycol, par exemple), et les tristyrylphénols à chaîne polyoxydes d'éthylène, de préférence choisi parmi un des condensats de poly(oxyde d'éthylène) et/ou de poly(oxyde de propylène) avec des alcools, des polyols, des alkylphénols, des esters d'acides gras, des amides d'acides gras et des amines grasses, et des sucres, notamment les esters de sucres.

**11.** Utilisation selon l'une quelconque des revendications 1 à 10, dans laquelle la quantité d'agent tensio-actif est inférieure à 25% en poids par rapport à la composition de polyisocyanates, de préférence inférieure à 20% en poids, et de préférence encore inférieure à 15%.

**12.** Utilisation selon l'une quelconque des revendications 1 à 11, dans laquelle la quantité d'agent tensio-actif est au moins égale à 1 %, de préférence au moins égale à 2% en poids par rapport au poids de la composition de polyisocyanates.

**13.** Utilisation selon l'une quelconque des revendications précédentes, dans laquelle la composition comprend en outre éventuellement un ou plusieurs pigments et/ou additifs choisis parmi additifs de rhéologie, d'étalement, tensio-actifs et autres, et leurs mélanges.

**14.** Utilisation selon l'une quelconque des revendications précédentes, dans laquelle le revêtement est un revêtement pour sols.

15. Utilisation selon l'une quelconque des revendications précédentes, dans laquelle le revêtement est approprié pour des substrats en bois, verre, métal, ciment, polymère thermoplastique ou thermodurcissable, de préférence pour des substrats en bois.

## Patentansprüche

1. Verwendung einer Härtemittelzusammensetzung des hydrophilen Polyisocyanat-Typs, die mindestens ein hydrophobes Polyisocyanat umfasst, für die Herstellung einer Polyurethanbeschichtungsformulierung in wässriger Phase, wobei das hydrophobe Polyisocyanat eine oder mehr Allophanatfunktionen umfasst, wobei die Allophanatfunktionen in der Härtemittelzusammensetzung bezüglich der Gesamtmolanzahl von bei der Herstellung der Härtemittelzusammensetzung umgewandelten Isocyanatmonomeren in einer Menge von mindestens gleich 6 Mol-%, vorteilhafterweise mindestens 8 Mol-% vorhanden sind,
wobei das Härtemittel ein anionisches und/oder nicht-ionisches Tensid umfasst, von dem weniger als 50 Masse-%, vorteilhafterweise weniger als 20 Masse-%, vorzugsweise weniger als 10 Masse-% in mittels einer chemischen Bindung an das Polyisocyanat gebundener Form vorliegen.

2. Verwendung gemäß Anspruch 1, wobei die Menge an Allophanatfunktionen bezüglich der Gesamtmolanzahl von bei der Herstellung der Härtemittelzusammensetzung umgewandelten Isocyanatmonomeren kleiner oder gleich 30 Mol-%, vorzugsweise kleiner oder gleich 25 Mol-% ist.

3. Verwendung gemäß Anspruch 1 oder 2, wobei das Polyisocyanat aus Alkylendiisocyanat-Homo- oder Heterokondensationsprodukten, die insbesondere Produkte des "Biuret"-Typs und des "Trimer"- oder sogar "Prepolymer"-Typs mit Isocyanatfunktion umfassen, aus aromatischen Isocyanaten entstammenden Polyisocyanatderivaten, die allein oder mit aliphatischen Verbindungen vermischt verwendet werden, und aus Mischungen daraus ausgewählt wird.

4. Verwendung gemäß irgendeinem der vorhergehenden Ansprüche, wobei die Allophanatfunktionen durch ein Allophanat mindestens eines Polyisocyanates mit mindestens einer Trägerverbindung einer Hydroxylfunktion, vorzugsweise mit einem einwertigen Alkohol, weiterhin vorzugsweise einem alkylischen, linearen, verzweigten oder zyklischen Alkohol herbeigeführt werden, der 1 bis 20 Kohlenstoffatome, vorteilhafterweise 1 bis 16 Kohlenstoffatome, insbesondere 1 bis 12 Kohlenstoffatome umfasst.

5. Verwendung gemäß irgendeinem der vorhergehenden Ansprüche, wobei die Allophanatfunktionen durch ein Allophanat bereitgestellt werden, das aus Allophanaten hydrophober Polyisocyanate ausgewählt wird, gegebenenfalls eine oder mehrere Funktionen umfassend, die aus Diazetidindion, Oxadiazintrion, Iminodimer, Iminotrimer (Iminotriazadion), Iminooxadiazindion (oder asymetrischer Trimer), Isocyanurat, Biuret, Urea, Urethan und deren Mischungen ausgewählt werden.

6. Verwendung gemäß irgendeinem der vorhergehenden Ansprüche, wobei die Allophanatfunktionen durch ein Allophanat von Isocyanuraten von Hexamethylendiisocyanat und/oder Hexamethylendisocyanat bereitgestellt werden, mit einer Trägerverbindung mit Hydroxylfunktion, vorzugsweise mit einem einwertigen Alkohol, ferner vorzugsweise einem linearen, verzweigten oder zyklischen Alkylalkohol, der 1 bis 20 Kohlenstoffatome, vorteilhafterweise 1 bis 16 Kohlenstoffatome, insbesondere 1 bis 12 Kohlenstoffatome umfasst.

7. Verwendung gemäß irgendeinem der vorhergehenden Ansprüche, wobei das anionische und/oder nicht-ionische Tensid ein Polyethylenglykol- und/oder Propylenglykolkettenfragment mit mindestens 1, vorteilhafterweise mindestens 3, vorzugsweise mindestens 5 Ethylenoxid- und/oder Propylenoxideinheiten umfasst.

8. Verwendung gemäß irgendeinem der Ansprüche 1 bis 7, wobei das Tensid der Formel (I) entspricht:

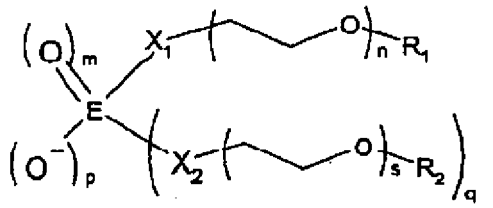

(I)

wobei:

- E ein Element darstellt, das aus Phosphor, Kohlenstoff und Schwefel ausgewählt wird,
- $R_1$ und $R_2$, identisch oder unterschiedlich, unabhängig voneinander einen Kohlenwasserstoffrest darstellen, der vorteilhafterweise aus $C_6$-$C_{30}$-Arylresten und $C_1$-$C_{20}$-Alkylresten, die gegebenenfalls substituiert werden, vorzugsweise $C_{10}$-$C_{20}$-Alkylresten, die gegebenenfalls substituiert werden, ausgewählt wird,
- $X_1$ eine Bindung oder einen zweiwertigen Rest darstellt, der aus $-Y_1-$, $-A_1-$, $-A_1-Y_1-$, $-Y_1-A_1-$, $-Y_1-A_1-Y'_1$ und $-[E(O)_mC(O^-)_p]-$ ausgewählt wird,
- $X_2$ eine Bindung oder einen zweiwertigen Rest darstellt, der aus $-Y_2-$, $-A_2-$, $-A_2-Y_2-$, $-Y_2-A_2-$ und $-Y_2-A_2-Y'_2$ ausgewählt wird,
- $A_1$ und $A_2$, identisch oder unterschiedlich, unabhängig voneinander einen gegebenenfalls substituierten, einschließlich funktionalisierten zweiwertigen Alkylenrest und zum Beispiel Ethylen oder Methylen darstellen,
- $Y_1$, $Y'_1$, $Y_2$ und $Y'_2$, identisch oder unterschiedlich, aus einem Chalkogen ausgewählt werden, das vorzugsweise aus den leichtesten, nämlich Schwefel und vor allem Sauerstoff ausgewählt wird, wobei die Metalloid-Elemente eine Ladungszahl haben, die höchstens gleich derjenigen von Phosphor ist, und zu der Gruppe VB der Klassifikation des Periodensystems der Elemente gehören, in Form von Amin- oder tertiären Phosphinderivaten, wobei der Rest, der den tertiären Charakter gewährleistet, vorteilhafterweise aus höchstens 4 Kohlenstoffatomen, vorzugsweise höchstens 2 Kohlenstoffatomen besteht,
- m Null oder eine ganze Zahl gleich 1 oder 2 darstellt,
- n Null oder eine ganze Zahl ist, die zwischen 1 und 30, vorteilhafterweise zwischen 5 und 25, vorzugsweise zwischen 9 und 20 ausgewählt wird (geschlossene Intervalle, das heißt die Grenzwerte umfassend),
- p eine ganze Zahl gleich 1, 2 oder 3 darstellt,
- q Null oder 1 darstellt, und
- s Null oder eine ganze Zahl zwischen 1 und 30, vorteilhafterweise zwischen 5 und 25, vorzugsweise zwischen 9 und 20 darstellt (geschlossene Intervalle, das heißt die Grenzwerte umfassend),

wobei vorgesehen ist, dass wenn E ein Kohlenstoffatom darstellt, q gleich Null ist, m 1 darstellt und $X_1$ eine Bindung oder einen zweiwertigen Rest darstellt, der aus $-A_1-$, $-Y_1-$, $-A_1-Y_1-$, -O-C(=O)-O- und $-[C(O)_m(O^-)_p]-$ ausgewählt wird.

**9.** Verwendung gemäß irgendeinem der Ansprüche 1 bis 8, wobei das Tensid die Struktur ($II_1$) oder die Struktur ($II_2$) besitzt:

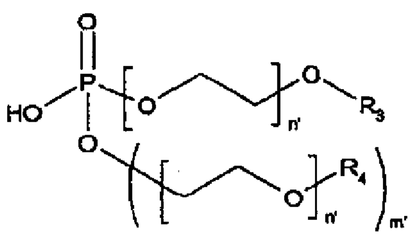

($II_1$)

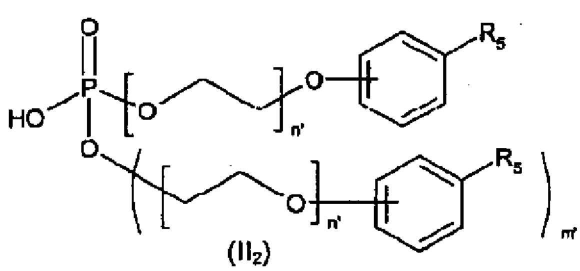

($II_2$)

wobei in den Strukturen:

- n' eine ganze Zahl zwischen 5 und 12 darstellt, Grenzwerte eingeschlossen,
- m' 0 oder 1 darstellt,
- $R_3$ und $R_4$, identisch oder unterschiedlich, unabhängig voneinander einen linearen oder verzweigten Alkylrest darstellen, der 10 bis 20 Kohlenstoffatome umfasst, und
- $R_5$ einen linearen oder verzweigten Alkylrest darstellt, der 6 bis 12 Kohlenstoffatome umfasst.

**10.** Verwendung gemäß irgendeinem der Ansprüche 1 bis 7, wobei das Härtemittel ein nicht-ionisches Tensid umfasst, das aus den Derivaten der Fettsäurepolyalkylenoxidester, der ethoxylierten Alkylphenole, der Esterphosphate mit Polyalkoxyalkylenglykolkette (wie zum Beispiel Polyethoxy- und/oder Propoxyethylenglykol), und Tristyrylphenolen mit Polyethylenoxidkette ausgewählt wird, vorzugsweise aus einem der Poly(ethylenoxid)- und/oder Poly(propylenoxid) kondensate mit Alkoholen, Polyolen, Alkylphenolen, Fettsäureestern, Fettsäureamiden und Fettaminen, und Zuckern, insbesondere Zuckerestern ausgewählt wird.

**11.** Verwendung gemäß irgendeinem der Ansprüche 1 bis 10, wobei die Tensidmenge bezogen auf die Polyisocyanatzusammensetzung kleiner als 25 Gew.-%, vorzugsweise kleiner als 20 Gew.-% und noch bevorzugter kleiner als 15 Gew.-% ist.

**12.** Verwendung gemäß irgendeinem der Ansprüche 1 bis 11, wobei die Tensidmenge bezogen auf das Gewicht der Polyisocyanatzusammensetzung mindestens gleich 1 Gew.-%, vorzugsweise mindestens gleich 2 Gew.-% ist.

**13.** Verwendung gemäß irgendeinem der vorhergehenden Ansprüche, wobei die Zusammensetzung ferner gegebenenfalls ein oder mehrere Pigmente und/oder Zusatzstoffe umfasst, die aus Rheologie-, Ausdehnungs-, Tensiden und anderen Zusatzstoffen und deren Gemischen ausgewählt werden.

**14.** Verwendung gemäß irgendeinem der vorhergehenden Ansprüche, wobei die Beschichtung eine Beschichtung für Böden ist.

**15.** Verwendung gemäß irgendeinem der vorhergehenden Ansprüche, wobei die Beschichtung für Holz-, Glas-, Metall-, Zement-, thermoplastische oder hitzehärtbare Polymer-Substrate, vorzugsweise für Holzsubstrate geeignet ist.

## Claims

**1.** Use of a hydrophilic polyisocyanate-type hardener composition comprising at least one hydrophobic polyisocyanate for preparing a polyurethane coating formulation in aqueous phase, said hydrophobic polyisocyanate comprising one or more allophanate functions, said allophanate functions being present in said hardener composition in an amount at least equal to 6 mol %, advantageously at least 8 mol % relative to the total number of moles of isocyanate monomers converted when preparing the hardener composition,
said hardener composition comprising an anionic and/or non-ionic surfactant wherein less than 50 %, advantageously less than 20 %, preferably less than 10 % by weight is bound by a chemical bond to the polyisocyanate.

**2.** Use according to claim 1, wherein the amount of allophanate functions is less than or equal to 30 mol %, preferably less than or equal to 25 mol % relative to the total number of moles of isocyanate monomers converted when preparing the hardener composition.

**3.** Use according to either claim 1 or claim 2, wherein the polyisocyanate is selected from the homocondensation or heterocondensation products of alkylene diisocyanate, comprising in particular "biuret"-type and "trimer"-type products, or even isocyanate function "prepolymers", from the polyisocyanate derivatives resulting from aromatic isocyanates used alone or in mixture with aliphatic compounds, and from the mixtures containing said products.

**4.** Use according to any one of the preceding claims, wherein the allophanate functions originate from an allophanate of at least one polyisocyanate with at least one compound carrying a hydroxyl function, preferably with a monoalcohol, more preferably a linear, branched or cyclic alkyl alcohol comprising from 1 to 20 carbon atoms, advantageously from 1 to 16 carbon atoms, more particularly from 1 to 12 carbon atoms.

**5.** Use according to any one of the preceding claims, wherein the allophanate functions originate from an allophanate selected from hydrophobic polyisocyanate allophanates, optionally comprising one or more functions selected from diazetidinedione, oxadiazinetrione, imino-dimer, imino-trimer (imino-triazadione) imino-oxidiazinedione (also known as asymmetric trimer), isocyanurate, biuret, urea, urethane and mixtures thereof.

**6.** Use according to any one of the preceding claims, wherein the allophanate functions originate from an allophanate of hexamethylene diisocyanate isocyanurate and/or hexamethylene diisocyanate, with a compound carrying a hydroxyl function, preferably with a monoalcohol, more preferably a linear, branched or cyclic alkyl alcohol comprising from 1 to 20 carbon atoms, advantageously from 1 to 16 carbon atoms, more particularly from 1 to 12 carbon atoms.

7. Use according to any one of the preceding claims, wherein the hardener comprises an anionic and/or non-ionic surfactant, optionally comprising a polyethylene glycol and/or propylene glycol chain fragment having at least 1, advantageously at least 3, preferably at least 5 ethylene oxyl and/or propylene oxyl units.

8. Use according to any one of claims 1 to 7, wherein the surfactant corresponds with formula (I):

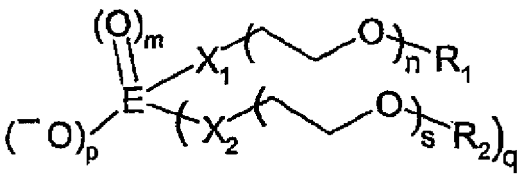

(I)

in which:

- E represents an element selected from phosphorus, carbon and sulphur;
- $R_1$ and $R_2$ are the same or different and represent, independently of one another, a hydrocarbon radical, advantageously selected from $C_6$-$C_{30}$ aryl radicals and $C_1$-$C_{20}$ alkyl radicals, optionally substituted, advantageously $C_{10}$-$C_{20}$ alkyl radicals, optionally substituted;
- $X_1$ represents a bond or a divalent radical selected from $-Y_1-$, $-A_1-$, $-A_1-Y_1-$, $-Y_1-A_1-$, $-Y_1-A_1-Y'_1-$ and $-[E(O)_m(O^-)_p]-$;
- $X_2$ represents a bond or a divalent radical selected from $-Y_2-$, $-A_2-$, $-A_2-Y_2-$, $-Y_2-A_2-$ and $-Y_2-A_2-Y'_2-$;
- $A_1$ and $A_2$ are the same or different and represent, independently of one another, a divalent alkylene radical, optionally substituted, including a functionalised divalent alkylene radical, and, for example, ethylene or methylene;
- $Y_1$, $Y'_1$, $Y_2$ and $Y'_2$ are the same or different and are selected from a chalcogen, advantageously selected from the lightest chalcogens, that is to say sulphur and, in particular, oxygen, the metalloid elements having atomic sizes at least equal to that of phosphorus and belonging to column VB of the periodic table, in the form of amine or phosphine tertiary derivatives, the radical which provides the tertiary character advantageously having at most 4 carbon atoms, preferably at most two carbon atoms;
- m represents zero or an integer equal to 1 or 2;
- n is zero or an integer selected between 1 and 30, advantageously between 5 and 25, preferably between 9 and 20 (inclusive, that is to say including the boundary values);
- p represents an integer equal to 1, 2 or 3;
- q represents zero or 1; and
- s represents zero or an integer between 1 and 30, advantageously 5 and 25, preferably between 9 and 20 (inclusive, that is to say including the boundary values); it being understood that when E represents a carbon atom, than q is equal to zero, m represents 1 and $X_1$ represents a bond or a divalent radical selected from $-A_1-$, $-Y_1-$, $-A_1-Y_1-$, -O-C(=O) -O- and $-[C(O)_m(O^-)_p]-$.

9. Use according to any one of claims 1 to 8, wherein the surfactant is of structure ($II_1$) or structure ($II_2$):

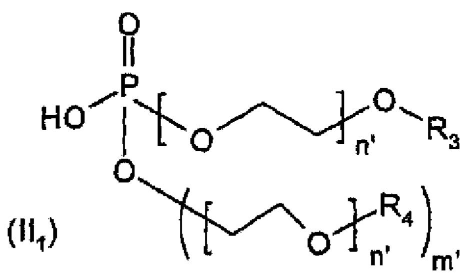

($II_1$)

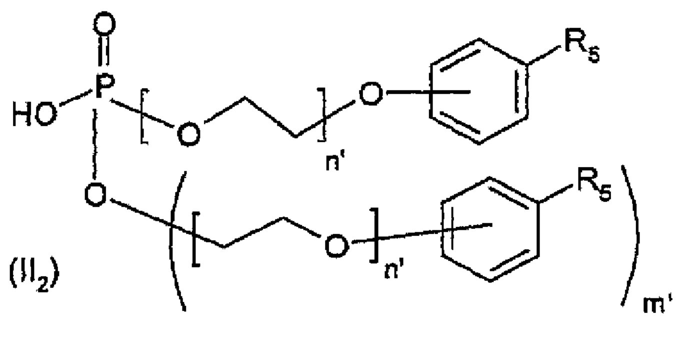

($II_2$)

in which structures:

- n' represents an integer between 5 and 12, inclusive;

- m' represents 0 or 1;
- $R_3$ and $R_4$ are the same or different and represent, independently of one another, a linear or branched alkyl radical comprising from 10 to 20 carbon atoms; and
- $R_5$ represents a linear or branched alkyl radical comprising from 6 to 12 carbon atoms.

**10.** Use according to any one of claims 1 to 7, wherein the hardener comprises a non-ionic surfactant selected from the derivatives of polyoxyalkylene fatty acid esters, ethoxylated alkylphenols, ester phosphates with a poly alkyloxy alkylene glycol chain (such as poly-ethoxy and/or
-propoxy ethylene glycol) and tristyrylphenols with an ethylene polyoxide chain, preferably selected from one of the condensates of poly(ethylene oxide) and/or poly(propylene oxide) with alcohols, polyols, alkylphenols, fatty acid esters, fatty acid amides and fatty amines, and sugars, in particular sugar esters.

**11.** Use according to any one of claims 7 to 10, wherein the amount of surfactant is less than 25 % by weight relative to the polyisocyanate composition, preferably less than 20 % by weight and more preferably less than 15 %.

**12.** Use according to any one of claims 7 to 11, wherein the amount of surfactant is at least equal to 1 %, preferably at least equal to 2 % by weight relative to the weight of the polyisocyanate composition.

**13.** Use according to any one of the preceding claims, wherein the composition optionally further comprises one or more pigments and/or additives selected from rheological additives, levelling additives, surfactant additives and other additives, and mixtures thereof.

**14.** Use according to any one of the preceding claims, wherein the coating is a flooring coating.

**15.** Use according to any one of the preceding claims, wherein the coating is suitable for wood, glass, metal, cement, thermoplastic or thermosetting polymer substrates, preferably for wood substrates.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0140347 A1
- WO 9955756 A
- EP 0524500 A


### Littérature non-brevet citée dans la description


- Matériaux polymères, structure, propriétés et applications. Hermès Science, 2000
- **MICHAEL SZYCHER.** Handbook of Polyuréthanes. CRC press, 1999
- **D. STOYE ; W. FREITAG.** Resins for coatings, Chemistry, Properties and Applications. Hanser, 1996
- **BEN VAN LEEUWEN.** High solids hydroxy acrylics and tightly controled molecular weight. *recueil de conférences de Eurocoat,* 1997, 505-515